# EUROPEAN PATENT SPECIFICATION

(11) **EP 0 876 229 B1**
(45) Date of publication and mention of the grant of the patent: **08.05.2002**
(21) Application number: 97909413.3
(22) Date of filing: 27.10.1997
(51) Int. Cl.: B21D 11/18, E04C 3/07

(54) **BENDING OF ELONGATE ELEMENTS**
BIEGEN VON LANGGESTRECKTEN ELEMENTEN
PLIAGE D'ELEMENTS ALLONGES

(30) Priority: 25.10.1996 GB 9622234; 03.09.1997 GB 9718708
(43) Date of publication of application: 11.11.1998
(73) Proprietor: British Aluminium Limited, Manchester M5 2SP (GB); Randle, James Neville, Bubbenhall, Nr. Coventry CV8 3BH (GB)
(72) Inventor: RANDLE, James, Neville, Nr Coventry CV8 3BH (GB); JARRETT, Martin, Banbury OX16 7SN (GB); ROGERS, Andrew, Banbury OX16 7SN (GB)
(74) Representative: Wise, Stephen James
(86) International application number: GB9702800
(87) International publication number: WO9818580

(56) References cited:
- GB-A- 2 148 752
- US-A- 2 277 615
- PATENT ABSTRACTS OF JAPAN vol. 014, no. 367 (M-1008), 9 August 1990 & JP 02 133230 A (TOYODA GOSEI CO LTD), 22 May 1990,

## Description

The invention relates to the bending of a longitudinal portion of an elongate element, in particular of an element which is hollow and has two opposite walls. One specific use of the invention is the introduction of an inclined length at a point along an elongate metal element of generally box like cross-sectional shape.

US-A-2277615 published in 1942 discloses a method of bending an I beam or an H beam by forming an elongate slit in the web, opposite sides of the slit being cut to form angled bodies which are brought into abutting relation under a lateral bending force. That action leaves gaps at each end of the bend line, the gaps being of different shape, and each is then concealed by a patch plate. Angle plates are welded to the sides of the beam to secure the abutted faces of the web in permanent relation and to reinforce the bend.

It is one object of the invention to introduce a bend into an elongate member which is hollow and has two facing walls both of which are to bend, and which needs little infilling after the bend has been introduced.

According to the invention in one aspect there is provided a method of introducing a bend portion into a straight elongate hollow member having opposite side wall portions, the method comprising the steps of:
1) cutting (i) an elongate slit in opposite side wall portions of the member, the slit extending substantially in the major axis of the member, and (ii) a cross-slit in the region of the bend point, the cross-slit extending between the other side wall portions and extending to overlie said other wall portions,
2) removing a portion of metal between the cross-slit and the elongate slit to allow movement of the walls of the elongate slit, and
3) applying a force to one side of the element and forward of the region of the cross-slit to introduce the bend.

While the invention may be applied to a hollow member of any cross-sectional shape having two generally parallel faces, it is particularly useful to apply the invention to a member of box-section.

The method may be used to introduce one or more bends at different points along the length of the member.

According to a more specific aspect of the invention there is provided a method of forming a bend portion in an elongate straight element of hollow box section, the section having a floor and roof and opposite sidewalls, the method comprising: (i) forming aligned slits in the top and bottom walls of the section, the slits comprising a major slit extending generally in or parallel to the major axis between the intended ends of the bend portion and a cross-slit at each end of the longitudinal slit, the cross-slits extending between the side walls and being inclined to the longitudinal axis and having at each end a portion which overlies the respective side wall, a generally triangular cut out being present at one end of each cross-slit, the triangular portions being on opposite sides of the longitudinal slit and (ii) applying a force to one side of the portion to be bent to cause the portions on opposite sides of the longitudinal slit to slide with respect to each other.

Preferably the slits, particularly the cross-slits, are provided with radiussed ends, i.e. where they overlie their respective sidewalls. By this means one avoids sharp corners that could otherwise act as stress raisers or points of crack initiation, which could propagate during fatigue loading. Co-operating mandrels may be introduced during the bending operation so that the radius of curvature is carefully controlled, again reducing the likelihood of failure due to cracking.

In the method of the invention when the lateral force is applied to the precursor of the bend portion, one side of the element being held in a chuck or the like, the opposite sides of the longitudinal slit move in sliding fashion past one another generally diagonally across the element so that a triangular portion on one side is closed and another is opened up on the diagonally opposite side. At the end of the operation, the gaps between the opposite walls of the slits and the triangular portion may be filled in and the whole then smoothened, e.g. polished. Generally the gaps at each end are small and easily and quickly filled in. The final seam may, if desired, be sealed by laser, MIG, TIG or friction stir welding or adhesive bonding.

In a preferred version when forming two bends the major slit and the cross slit are combined by making the major slit extending substantially diagonally across the distance between the bends so that opposite generally triangular edge portions are formed.

While the bend has strength, in a further preferred embodiment a reinforcing element may be introduced inside the box section to increase the strength of the bend formed.

The method of the invention requires the use of relatively low forces to achieve the desired bending enabling relatively low strength, and hence low cost, tooling to be used. The provision of an accurate cutting path enables the work-piece used to be self-jigging and the same tools may be used for different profiles, again affording significant cost savings.

In order that the invention may be well understood it will now be described by way of example only with reference to the accompanying diagrammatic drawings, in which:
Figure 1 is a plan view of one box section tube before bending;
Figure 2 is a cross-sectional view taken on lines II-II on Figure 1;
Figure 3 is a plan view of the bending jig;
Figure 4 is a plan view of the tube after bending;
Figure 5 is a plan view of a portion of another box section tube showing the slit arrangement before bending;
Figure 6 is a similar view to Figure 5 showing the use of mandrels during the bending;
Figure 7 is a similar view to Figures 5 and 6 showing the end of the bending operation; and
Figure 8A and 8B show an alternative embodiment of the invention.

An elongate element E is a one piece extrusion made up of a floor 1, a roof 2, and opposite side walls 3, 4 to define a hollow box section. The extrusion is made of metal or alloy, e.g. steel or aluminium, or plastics or composite or the like. The sides of the extrusion are straight and parallel.

In the method of the invention to introduce a lazy bend in the length of the extrusion a generally H shaped slit is cut in the floor 1 and the roof 2. The slits are vertically aligned and each comprises a long slit H1 generally in the major axis of the extrusion. At each end slits H2 are cut, inclined to the major axis, having at each end a circular cut out H3 overlying the thickness of the sidewalls 3, 4. The sidewall of one length of the slit is cut away to form a generally triangular portion H4, one on each side of the long slit H1. The other portion of the end slit H2 has parallel sidewalls H5, H6 spaced slightly apart. The slits may be cut in any convenient way, including by machine slitter or by laser cutting and with or without plasma enhancement.

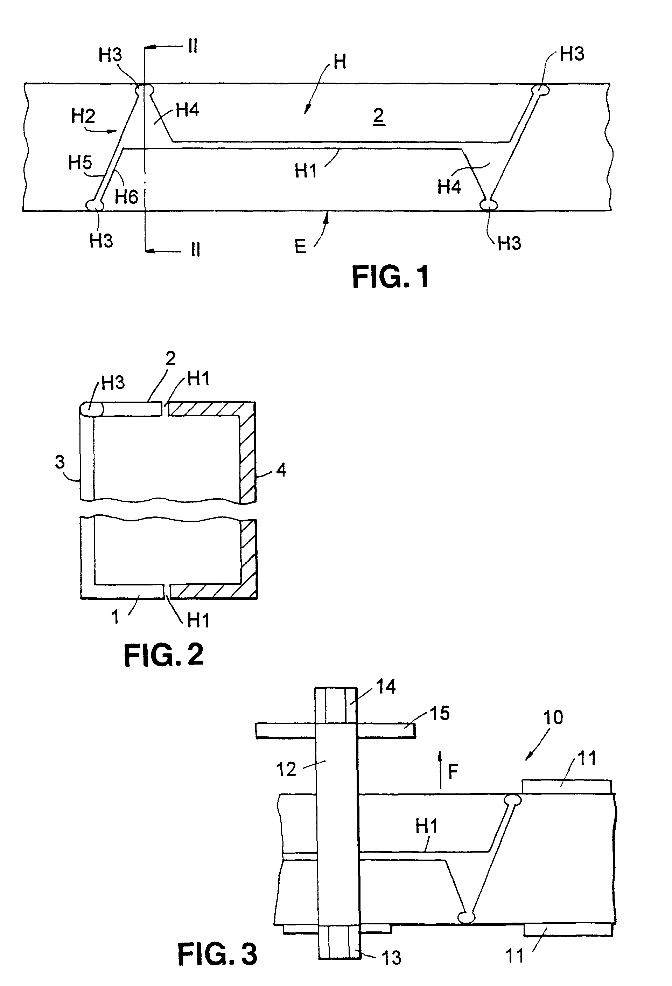

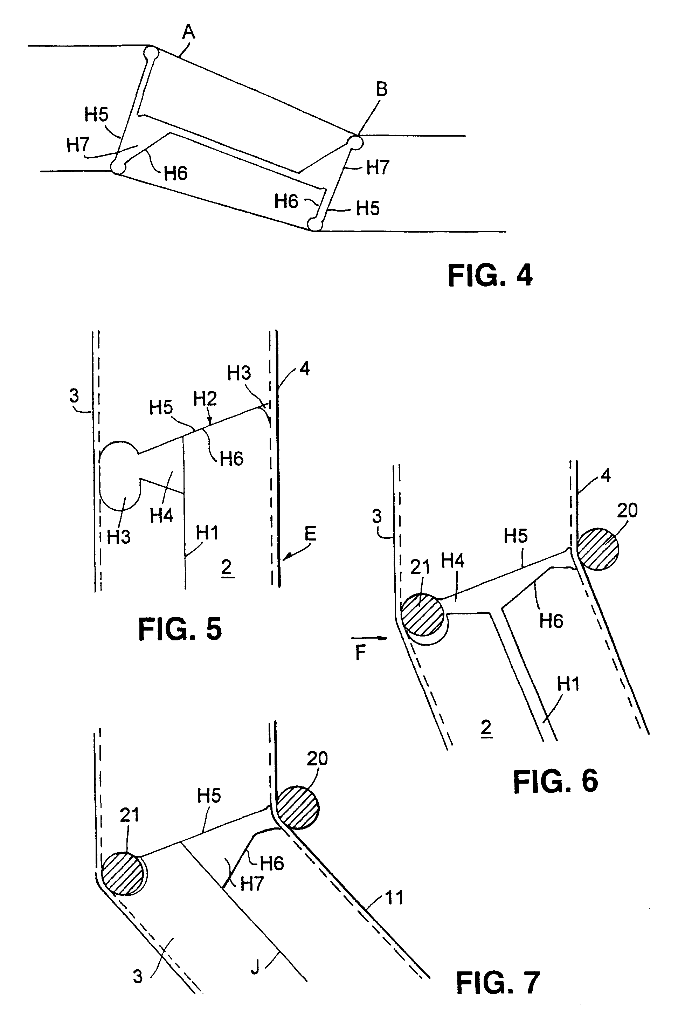

The length is mounted in between parallel side walls of a chuck 11 of a jig 10 (Figure 3) with the portion having the slit H extending beyond the chuck. A G clamp 12 is mounted with one jaw 13 in engagement with one side of the element beyond the slit H and another 14 in engagement with a wall 15 laterally spaced from the chuck 11. The clamp is then tightened to apply a force F to move the extrusion towards the wall 15. The slit portion bends and the opposite faces of the long slit H1 slide to reach the condition shown in Figure 4 where the opposite faces are abutted at J. It will be noted that the left hand triangular portion H4 has closed up, moving the sidewalls H5, H6 apart to form a corresponding triangular portion H7 and the same effect has happened at the other end of the slit H1. The length between the slits H2 has been bent as required without any cracking of the metal or distortion of the box section. The holes may be filled in and the whole rubbed down to leave little or no tell tale marks of how the bend was introduced into the element. Holes may be drilled in the sidewalls 3, 4 and cross-members, e.g. bolts, introduced for the element to be mounted, e.g. as a frame member of a car chassis.

In the embodiment shown the inclined portion is introduced intermediate the ends of an elongate element, so forming two bends A and B (Figure 4). In the method of the invention one bend only may be introduced, e.g. towards the end of an element.

In Figures 5 to 7 is shown the use of mandrels and the cross-slits have radiussed ends, the mandrels tending to control the radius of curvature achieved during bending. Like parts are given like reference numbers as in Figures 1 to 4.

Extrusion E has a longitudinal slit H₁ in its wall 2 ending in a cross-slit H₂ extending between the walls 3 and 4 at an angle to the longitudinal axis. The cross-slit H₂ is radiussed at its ends H₃. The sidewall at one half of slit H₂ is cut-away similar to that of Figure 1 to leave a cut-out region H₄ whereas the other half of the slit H₂ has closely spaced parallel sidewall portions H₅, H₆, again similar to Figure 1.

A similar arrangement of slits is cut into the opposite wall (not shown) of the extrusion, i.e. equivalent to wall 1 in Figure 1.

In Figure 6 a mandrel 20 is positioned against the exterior of wall 4 opposite to slot H₂ at the desired position of the bend. A corresponding mandrel 21 is positioned inside the radiussed end H₃ of slot H₂ to bear on the inside of wall 3. A bending force in the direction of arrow F has been applied and this Figure shows bending partially completed. Cut-out portion H₄ has partially closed and sidewalls H₅ and H₆ have moved apart.

Figure 7 shows the completed bending operation. Cut-out portion H₄ has closed as its opposed walls have come together. A corresponding portion H₇ has opened between sidewalls H₅ and H₆. The edges of slit H₁ have closed together. The mandrels have controlled the bending operation to the desired pre-determined radius and, in conjunction with the radiussed slits, have minimised any risk of stress or crack failure.

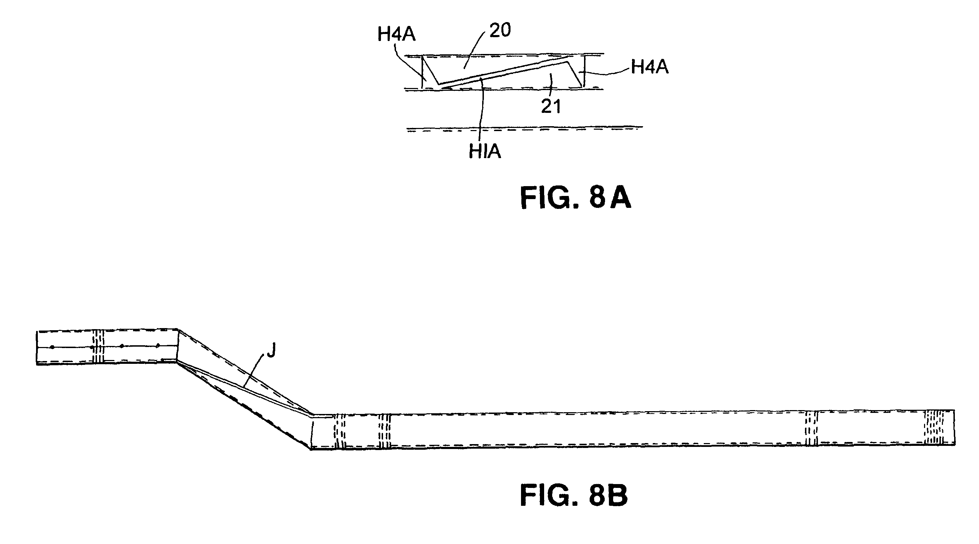

In the method shown in Figures 8A and 8B the two opposite sidewalls are cut to form generally triangular edge portions 20,21, leaving a diagonal slit H1A in between and having at each end a slot H4A. When a bending force is applied the bend portion shown in Figure 8B is formed. Because of the accuracy and the geometry the faces of slit H1A are abutted to form joint J and little or no infilling is required.

The invention is not limited to the embodiment shown. For example, the force to bend the extrusion may be any suitable apparatus and not just the G clamp shown. Reinforcing elements may be located in the portion to be bent.

## Claims

1. A method of introducing a bend portion into a straight elongate hollow member (E) having opposite side wall portions (1, 2, 3, 4), the method comprising the steps of:
1) cutting (i) an elongate slit (H1) in opposite side wall portions (1, 2) of the member, the slit extending substantially in the major axis of the member, and (ii) a cross-slit (H2) in the region of the intended bend point, the cross-slit extending between the other side wall portions (3, 4) and extending to overlie said other wall portions (3, 4), and
2) removing a portion of metal (H4) between the cross-slit and the elongate slit to allow movement of the walls of the elongate slit, and
3) applying a force (F) to one side of the element and forward of the region of the cross-slit to introduce the bend.

2. A method according to Claim 1, wherein the hollow member is of box-section.

3. A method according to Claim 1 or 2, wherein a cross-slit (H2) is formed at each end of the elongate slit (H1) and in communication with the elongate slit.

4. A method of forming a bend portion in an elongate straight member of hollow box section having a floor (1) and roof (2) and opposite sidewalls (3, 4), the method comprising: (i) forming aligned slits (H1) in the top and bottom walls of the section, the slits comprising a major slit extending generally in or parallel to the major axis between the intended ends of the bend portion and a cross-slit (H2) at each end of the longitudinal slit, the cross-slits extending between the side walls (3, 4) and being inclined to the longitudinal axis and having at each end a portion which overlies the respective side wall, a generally triangular cut out (H4) being present at one end of each cross-slit, the triangular portions being on opposite sides of the longitudinal slit and (ii) applying a force to one side of the portion to be bent to cause the portions on opposite sides of the longitudinal slit to slide with respect to each other.

5. A method according to any preceding claim, in which the ends of the cross-slits are radiussed.

6. A method according to any preceding claim, in which a pair of mandrels (20, 21) is used to assist the bending operation, one mandrel (21) lying inside one end of a cross-slit (H2) and bearing against the inside of a wall (3) of the member and the other mandrel (20) bearing against the outside of the opposite wall (4) of the member adjacent the other end of the cross-slit (H2).

7. A method according to any preceding Claim, wherein the elongate slit (H1A) extends longitudinally of the member at an angle to the major axis thereof, whereby the elongate slit extends substantially diagonally between two longitudinally spaced apart portions to be bent.

8. A method according to any preceding Claim, including the steps of filling in the gaps (H3, H7) formed by the bending operation and then smoothing the surface whereby tell tale marks are avoided.

9. A method according to any preceding Claim, in which any gaps in the bent product are sealed by laser, MIG, TIG, friction stir welding or adhesive bonding.

10. An elongate hollow member having opposite wall portions (1, 2, 3, 4) and comprising a bend portion formed by a method according to any preceding Claim having cross-slits (H2) made in opposite side walls (1, 2) and extending to overlie the thickness of the other wall portions (3, 4).

## Patentansprüche

1. Verfahren zum Einbringen eines Biegungsabschnitts in ein gerades längliches hohles Element (E) mit gegenüberliegenden Seitenwandteilen (1, 2, 3, 4), wobei das Verfahren die folgenden Schritte aufweist:
1) Schneiden (i) eines länglichen Schlitzes (H1) in gegenüberliegende Seitenwandteile (1, 2) des Elements, wobei sich der Schlitz im Wesentlichen entlang der Hauptachse des Elements erstreckt, und (ii) eines Querschlitzes (H2) in den Bereich des beabsichtigten Biegepunkts, wobei sich der Querschlitz zwischen den anderen Seitenwandteilen 3, 4 erstreckt und fortgesetzt ist, um die anderen Wandteile (3, 4) zu überlagern, und
2) Entfernen eines Metallabschnitts (H4) zwischen dem Querschlitz und dem länglichen Schlitz, um eine Bewegung der Wände des länglichen Schlitzes zu erlauben, und
3) Aufbringen einer Kraft (F) auf eine Seite des Elements und vor dem Bereich des Querschlitzes, um die Biegung einzubringen.

2. Verfahren nach Anspruch 1, wobei das hohle Element einen Kastenquerschnitt hat.

3. Verfahren nach Anspruch 1 oder 2, wobei ein Querschlitz (H2) an jedem Ende des länglichen Schlitzes (H1) und in Verbindung mit dem länglichen Schlitz gebildet ist.

4. Verfahren zum Herstellen eines Biegungsabschnitts in einem länglichen geraden Element mit hohlem Kastenquerschnitt mit einem Boden (1) und einer Decke (2) und entgegengesetzten Seitenwänden (3, 4), wobei das Verfahren aufweist: (i) Bilden von ausgerichteten Schlitzen (H1) in der oberen Wand und in der unteren Wand des Abschnitts, wobei die Schlitze einen Hauptschlitz, der sich im Wesentlichen entlang oder parallel zur Hauptachse zwischen den beabsichtigten Enden des gebogenen Abschnitts erstreckt, und einen Querschlitzes (H2) an jedem Ende des Längsschlitzes aufweisen, wobei der Querschlitz sich zwischen den Seitenwänden (3, 4) erstreckt und bezüglich der Längsachse schräg angeordnet ist und an jedem Ende einen Abschnitt aufweist, der über der jeweiligen Seitenwand liegt, wobei eine im Wesentlichen dreieckiger Ausschnitt (H4) an einem Ende eines jeden Querschlitzes vorgesehen ist, wobei die dreieckigen Abschnitte an entgegengesetzten Seiten des Längsschlitzes vorgesehen sind und (ii) Aufbringen einer Kraft auf eine Seite des Abschnitts, der gebogen werden soll, um zu bewirken, dass sich die Abschnitte an gegenüberliegenden Seiten des Längsschlitzes relativ zueinander verlagern.

5. Verfahren nach einem der vorangehenden Ansprüche, wobei die Enden der Querschlitze mit einem Radius versehen sind.

6. Verfahren nach einem der vorangehenden Ansprüche, wobei ein Werkzeugdornpaar (20, 21) verwendet wird, um den Biegeschritt zu unterstützen, wobei ein Werkzeugdorn (21) innerhalb eines Endes eines Querschlitzes (H2) liegt und an der Innenseite einer Wand (3) des Elements anliegt und der andere Werkzeugdorn (20) an der Außenseite der gegenüberliegenden Wand (4) des Elements dem anderen Ende des Querschlitzes (H2) benachbart anliegt.

7. Verfahren nach einem der vorangehenden Ansprüche, wobei der längliche Schlitz (H1A) sich in Längsrichtung des Elements mit einem Winkel zu dessen Hauptachse erstreckt, wodurch sich der Längsschlitz im Wesentlichen diagonal zwischen zwei in Längsrichtung beabstandeten Abschnitten erstreckt, die gebogen werden sollen.

8. Verfahren nach einem der vorangehenden Ansprüche, aufweisend die Schritte des Füllens der Spalte (H3, H7), die durch den Biegeschritt gebildet werden und dann Glätten der Oberfläche, wodurch Hinweismarken vermieden sind.

9. Verfahren nach einem der vorangehenden Ansprüche, wobei Spalte in dem gebogenen Gegenstand durch Laser-, MIG-, TIG-, Reib-Schweißen oder Kleben verschlossen werden.

10. Längliches hohles Element mit gegenüberliegenden Wandteilen (1, 2, 3, 4), aufweisend einen gebogenen Abschnitt, der durch ein Verfahren gemäß einem der vorhergehenden Ansprüche hergestellt wurde, mit Querschlitzen (H2), die in gegenüberliegenden Seitenwänden (1, 2) gebildet sind und fortgesetzt sind, um die Dicke der anderen Wandteile (3, 4) zu überlagern.

## Revendications

1. Procédé pour former une partie coudée dans un tube rigide creux allongé (E) ayant des portions à parois opposées (1, 2, 3, 4), le procédé comprenant les étapes consistant à :
1) pratiquer (i) une incision longitudinale (H1) dans des portions à parois opposées (1, 2) du tube, l'incision s'étendant considérablement dans l'axe majeur du tube, et (ii) une incision transversale (H2) dans la région de la partie à couder, l'incision transversale se prolongeant entre les parois (3, 4) et s'étendant pour recouvrir lesdites autres parois (3,4) et
2) enlever une portion de métal (H4) entre l'incision transversale et l'incision longitudinale pour permettre le mouvement des parois de l'incision longitudinale, et
3) appliquer une force (F) sur un coté de l'élément et en avant de la région de l'incision transversale pour former le coude.

2. Procédé selon la Revendication 1, dans lequel le tube creux est de section carrée.

3. Procédé selon la Revendication 1 ou 2, dans lequel une incision transversale (H2) est pratiquée à chaque extrémité de l'incision longitudinale (H1) et communique avec l'incision longitudinale.

4. Procédé pour former une partie coudée dans un tube rigide allongé de section carrée creuse ayant un fond (1) et un plafond (2) et des parois opposées (3, 4), le procédé comprenant : (i) la formation d'incisions alignées (H1) dans les parois supérieure et inférieure de la section, les incisions comprenant une incision principale s'étendant généralement dans ou parallèlement à l'axe principal entre les extrémités définies de la partie à couder et une incision transversale (H2) à chaque extrémité de l'incision longitudinale, les incisions transversales s'étendant entre les parois (3, 4) et étant inclinées par rapport à l'axe longitudinal et ayant à chaque extrémité une partie qui se prolonge dans chaque paroi respective, une coupe généralement triangulaire (H4) étant présente à chaque extrémité de l'incision longitudinale, les parties triangulaires étant du coté opposé à l'incision longitudinale et (ii) l'application d'une force d'un coté de la partie à couder pour que les parties du coté opposé à l'incision longitudinale glissent pour s'ajuster l'une à l'autre.

5. Procédé selon l'une quelconque des revendications précédentes, dans lequel les extrémités des incisions transversales sont radiales.

6. Procédé selon l'une quelconque des revendications précédentes, dans lequel une paire de mandrins (20, 21) est utilisée pour aider l'opération de coudage, un mandrin (21) se trouvant à l'intérieur à l'une des extrémités d'une incision transversale (H2) et reposant sur la paroi interne (3) du tube et l'autre mandrin (20) reposant contre la paroi extérieure opposée (4) du tube adjacente à l'autre extrémité de l'incision transversale (H2).

7. Procédé selon l'une quelconque des revendications précédentes, dans lequel l'incision longitudinale (HIA) prolonge le tube selon l'angle de l'axe majeur, moyennant quoi l'incision longitudinale s'étend considérablement en diagonale entre l'espace longitudinal délimité par les deux portions à couder.

8. Procédé selon l'une quelconque des revendications précédentes, incluant les étapes de remplissage des espaces (H3, H7) créés par l'opération de coudage et ensuite de polissage de la surface moyennant quoi il n'y a pas de traces de l'opération.

9. Procédé selon l'une quelconque des revendications précédentes, dans lequel tous les espaces dans la partie coudée sont fermés avec une soudeuse au laser, MIG, TIG, sous pression ou par l'application d'un adhésif.

10. Tube creux allongé ayant des parties à parois opposées (1, 2, 3, 4) et comprenant une partie coudée formée par un procédé selon l'une quelconque des revendications précédentes, comportant des incisions transversales (H2) pratiquées dans les parois opposées (1, 2) et se prolongeant dans l'épaisseur des parois opposées (3, 4).
